## Europäisches Patentamt

## European Patent Office

## Office européen des brevets

(11) Numéro de publication: **0 114 135**
**A2**

## DEMANDE DE BREVET EUROPEEN

(21) Numéro de dépôt: **84400053.9**

(22) Date de dépôt: **11.01.84**

(51) Int. Cl.³: **G 03 B 27/02**

(30) Priorité: **14.01.83 FR 8300523**

(43) Date de publication de la demande: **25.07.84**
**Bulletin 84/30**

(84) Etats contractants désignés: **AT BE CH DE GB IT LI LU NL SE**

(71) Demandeur: **STEREOSCOPES LESTRADE et Cie. S.A., 10, avenue des Acacias, F-65500 Vic-en-Bigorre (FR)**

(72) Inventeur: **Vitrac, Jean-Pierre, 128, Boulevard Blanqui, F-75013 Paris (FR)**

(74) Mandataire: **CABINET BONNET-THIRION, 95 Boulevard Beaumarchais, F-75003 Paris (FR)**

(54) **Appareil pour visionner des vues diapositives.**

(57) Il s'agit d'un appareil pour visionner des vues diapositives montées de façon connue sur un disque, et former une rangée circulaire de vues selon un rayon choisi.

L'appareil selon l'invention est caractérisé en ce qu'il comprend un boîtier (10) à l'intérieur duquel le disque (12) peut tourner sur un axe (A), ledit boîtier ayant au moins un dégagement périphérique (10F, 10G) permettant un entraînement en rotation du disque (12) sur ledit axe (A) et une paire de fenêtres (10C, 10D) en vis-à-vis entre lesquelles les vues (13) sont appelées à défiler, et, de part et d'autre des fenêtres, un élément antérieur (11B) est adapté à porter, à distance et en regard des fenêtres, une optique comportant au moins une lentille (15), et un élément postérieur (11C), adapté à former une barrette pour accrochage de l'appareil à un vêtement.

Cet appareil peut être utilisé et porté comme un insigne connu sous le nom de «badge» du fait que la face antérieure du boîtier peut recevoir toute inscription ou illustration quelconque.

0114135

## Appareil pour visionner des vues diapositives.

La présente invention concerne un appareil pour visionner des vues diapositives montées de façon connue en une rangée circulaire de vues dans un disque support.

L'appareil selon l'invention est essentiellement caractérisé en ce qu'il comprend un boîtier à l'intérieur duquel le disque peut tourner sur un axe, ce boîtier présentant au moins un dégagement périphérique permettant un entraînement en rotation du disque sur ledit axe, et une paire de fenêtres en vis-à-vis entre lesquelles les vues sont appelées à défiler, et, de part et d'autre de ladite paire de fenêtres, un élément antérieur adapté à porter, à distance et en regard des fenêtres, une optique comportant au moins une lentille, et un élément postérieur adapté à former une barrette pour accrochage de l'appareil à un vêtement.

L'appareil ainsi conçu permet d'être particulièrement attractif en raison de la possibilité qu'il offre d'être utilisé et porté comme un insigne du type notamment connu sous le nom de "badge", la face antérieure du boîtier offrant une surface disponible pour toute inscription, ou illustration de nature quelconque, qui peut être en rapport notamment avec la personnalité de l'utilisateur, avec une région touristique illustrée par les diapositives, avec l'objet d'une quelconque entreprise, etc..

L'appareil selon l'invention se prête en outre à une exploitation commerciale extensive en raison de possibilités de fabrication en série dans des conditions économiques très favorables.

Suivant une forme de réalisation, l'élément antérieur et l'élément postérieur sont d'un seul tenant et forment un pont emboîtable sur le boîtier qui peut être interchangeable au gré de l'usager, de sorte qu'avec un même élément optique-barrette l'usager peut visionner un nombre quelconque de disques porte-vues.

D'autres caractéristiques et avantages de l'invention ressortiront d'ailleurs de la description qui va suivre donnée à titre d'exemple, en référence aux dessins annexés dans lesquels :

la figure 1 est une vue en perspective de l'appareil selon l'invention prêt à l'utilisation ;

la figure 2 est une vue en coupe selon un plan indiqué par II-II à la figure 1 ;

la figure 3 montre en perspective éclatée un ensemble élément antérieur - élément postérieur.

Suivant une forme d'exécution de l'invention montrée aux figures, l'appareil comprend un boîtier 10 constitué de deux coquilles 10A, 10B, dites ci-après respectivement frontale et dorsale, déterminant une fois assemblées, par exemple par emboîtement avec enclenchement élastique, un logement pour un disque 12 portant en une rangée circulaire de rayon donné, une série de vues diapositives 13 de format choisi. Le disque 12 est en son centre perforé en 14 pour son montage rotatif sur un axe A solidaire, dans l'exemple représenté, de la coquille dorsale 10B ; afin d'éviter que le disque 12 ne s'échappe de l'axe A , ce dernier est prévu de sorte que son extrémité libre se trouve placée pratiquement au contact de la face intérieure de la coquille frontale 10A.

De préférence les coquilles 10A, 10B sont réalisées en matière plastique, et elles présentent chacune une fenêtre 10C, 10D, correspondant au format des diapositives ; ces fenêtres sont en vis-à-vis lorsque les coquilles sont assemblées, et elles sont prévues de manière que les vues diapositives défilent entre elles.

Le boîtier ainsi constitué est aménagé pour permettre la préhension du disque en vue de son entraînement en rotation.

Suivant l'exemple de réalisation représenté, la préhension du disque est prévue à l'opposé des fenêtres, donc suivant une ligne diamétrale, étant donné que les coquilles sont circulaires ; à cet effet, au moins l'une des coquilles, mais de préférence les deux, comportent un dégagement 10F, 10G laissant apparaître un tronçon périphérique du disque 12.

De part et d'autre des fenêtres précitées 10C, 10D, l'appareil comporte un élément antérieur 11B adapté à porter, à distance et en regard desdites fenêtres une optique comportant au moins une lentille 15, et un élément postérieur 11C adapté à former une barrette 16 pour accrochage de l'appareil à un vêtement.

Suivant une forme de réalisation préférentielle, les deux éléments antérieur 11B, et postérieur 11C, sont réalisés d'un seul tenant par moulage d'une matière plastique.

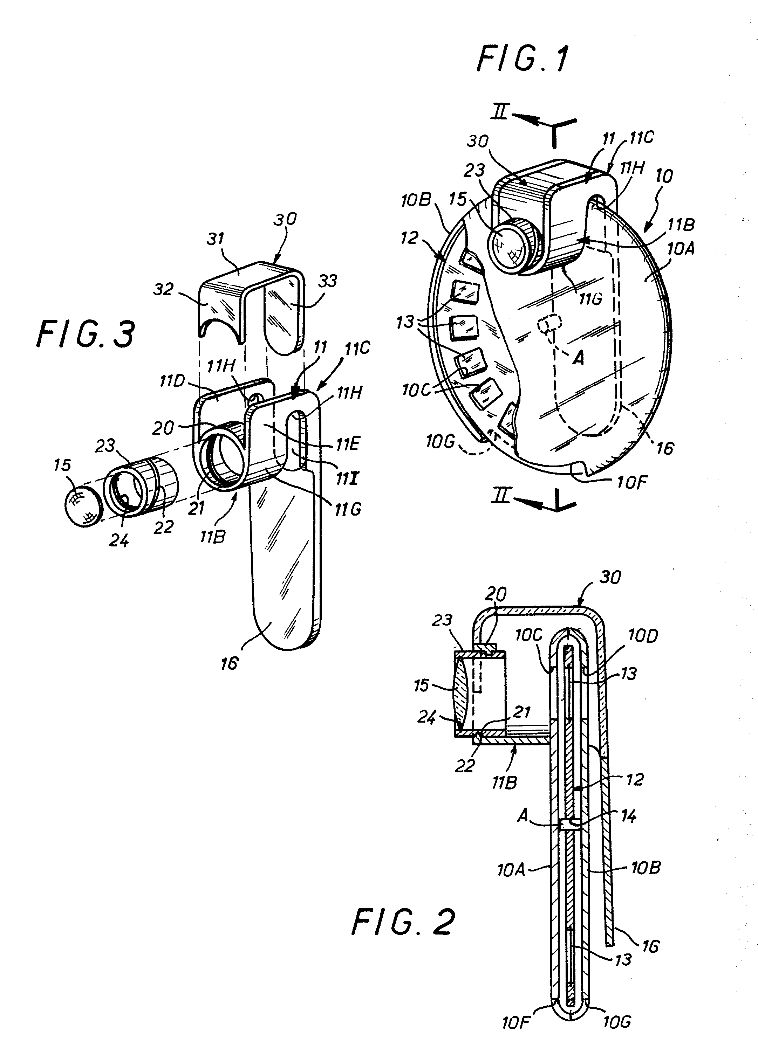

Selon une telle forme de réalisation, visible en particulier à la figure 3 les éléments antérieur et postérieur forment un pont 11 emboîtable radialement sur le boîtier 10, grâce à une échancrure 11H s'étendant entre lesdits éléments. Les parties supérieures des éléments antérieur 11B et postérieur 11C sont formées par deux joues 11D, 11E, parallèles et espacées qui s'étendent d'une extrémité de l'élément antérieur à une extrémité opposée de l'élément postérieur, Pour ce qui concerne l'élément antérieur, les joues en cause sont réunies par un tronçon semi-cylindrique 11G, de sorte que cet élément présente une section transversale globalement en forme d'U, tandis que pour l'élément postérieur 11C les joues ménagent entre elles, et dans la partie haute de ce dernier, une ouverture 11I.

Chaque joue 11D et 11E comporte une échancrure 11H ayant un profil en correspondance avec une zone périphérique du boîtier 10 de sorte à permettre l'emboîtement desdits éléments sur le boîtier 10.

A son extrémité libre, l'élément antérieur 11B reçoit une optique de visée réduite ici à une seule lentille 15, qui peut y être fixée de toute manière appropriée, mais qui est de préférence montée réglable axialement entre deux positions extrémes, ceci afin de permettre l'adaptation à la vision de l'usager de la position de l'optique qui est à focale courte pour réduire l'encombrement de l'appareil.

Dans ce but, ladite extrémité libre est prévue avec un anneau 20, comportant sur sa face intérieure une nervure hélicoïdale formant filet de vis 21, qui coopère avec une saignée 22 ménagée sur la face extérieure d'une bague molette 23. La fixation de la lentille 15 à l'intérieur de la bague molette 23 est réalisée avantageusement par emboîtement élastique dans une gorge 24 ménagée à cet effet à l'intérieur de ladite bague.

Par rotation de la bague 23 on déplace la lentille 15 par rapport aux vues diapositives, et, partant, on peut ajuster la position de la lentille à la vision de l'usager.

En ce qui concerne le montage réglable de la lentille 15 sur l'élément antérieur, on note que l'anneau 20 pourrait être supprimé ; dans un tel cas le réglage de la lentille 15 peut être obtenu en ménageant sur la face intérieure du tronçon semi-cylindrique 11G, une nervure hélicoïdale limitée à ce tronçon, ou encore au moins un plot saillant, la nervure et le plot étant adaptés à coopérer avec la saignée 22 ménagée sur la face extérieure de la bague.

L'appareil est avantageusement muni d'un organe diffusant, en matériau clair dépoli, disposé au moins en regard de la fenêtre 10D de la coquille dorsale.

Selon une forme d'exécution préférentielle le pont reçoit l'organe diffusant indiqué globalement en 30 à la figure 3 en particulier. A cet effet l'organe diffusant présente de part et d'autre d'une base 31, des ailes coudées à 90° 32, 33 ; l'extrémité de l'aile 32 présente une forme en demi-cercle rentrant de sorte à coopérer avec l'anneau 20, ou avec la bague 23 si l'élément antérieur 11B ne comporte pas d'anneau, tandis que l'aile 33 est adaptée à être disposée au moins en partie à l'opposé de la lentille optique 15, dans l'ouverture précitée 11I.

L'organe diffusant 30 est engagé entre les joues 11D, 11E, il est fixé dans cette position par exemple par effet de pincement, collage, ou emboîtement d'éléments complémentaires prévus à cet effet.

Les éléments antérieur et postérieur, d'un seul tenant, sont avantageusement associés au boîtier de manière amovible pour permettre l'interchangeabilité du boîtier. A cet effet, l'ensemble formé par les éléments d'un seul tenant, peut être fixé au boîtier 10 par effet de pincement au niveau des échancrures 11H ; un tel effet de pincement étant éventuellement complété par des moyens de verrouillage tels que picots prévus sur les bords des échancrures 11H et adaptés à s'engager dans des trous ou dépressions ménagées à cet effet dans l'une quelconque des coquilles de sorte que ledit ensemble est automatiquement placé en position correcte sur le boîtier, tandis que son désassemblage intempestif est interdit, tout en permettant, le cas échéant, de dissocier le boîtier dudit ensemble.

Il convient de noter que la face libre de la coquille antérieure forme un emplacement disponible pour l'impression d'un texte ou d'une image quelconque.

Bien entendu l'invention n'est pas limitée au mode de réalisation choisi et représenté, qui peut recevoir diverses modifications sans pour autant sortir du cadre de l'invention, c'est ainsi que l'élément antérieur 11B porte-optique pourrait être venu de moulage avec la coquille 10A, tandis que l'élément postérieur 11C pourrait être venu de moulage avec la coquille 10B, lesdites coquilles étant assemblées de façon amovible afin de permettre l'échange du disque.

REVENDICATIONS

1. Appareil pour visionner des vues diapositives montées de façon connue sur un disque, et former une rangée circulaire de vues selon un rayon choisi, caractérisé en ce qu'il comprend un boîtier (10) à l'intérieur duquel le disque (12) peut tourner sur un axe ( A ), ce boîtier ayant au moins un dégagement périphérique (10F,10G) permettant un entraînement en rotation du disque (12) sur ledit axe ( A ) et une paire de fenêtres (10C,10D) en vis-à-vis entre lesquelles les vues (13) sont appelées à défiler, et, de part et d'autre des fenêtres, un élément antérieur (11B) adapté à porter, à distance et en regard des fenêtres, une optique comportant au moins une lentille (15) et un élément postérieur (11C), adapté à former une barrette (16) pour accrochage de l'appareil à un vêtement.

2. Appareil selon la revendication 1, caractérisé en ce que le boîtier est constitué par deux coquilles circulaires (10A,10B) assemblées par enclenchement élastique, l'une des coquilles portant l'axe (A ) pour la rotation du disque (12), cet axe étant adapté à assurer l'immobilisation du disque en sens axial.

3. Appareil selon la revendication 2, caractérisé en ce que chaque coquille (10A,10B) comporte d'une part, une fenêtre (10C,10D) en correspondance avec le rayon choisi de la rangée circulaire de vues (13) et un dégagement (10F,10G) ménagé sur un tronçon de périphérie.

4. Appareil selon la revendication 2 ou 3, caractérisé en ce que fenêtres (10C,10D) et dégagements (10F,10G) sont diamétralement opposés.

5. Appareil selon l'une quelconque des revendications précédentes, caractérisé en ce que les deux éléments antérieur (11B) et postérieur (11C) sont réalisés d'un seul tenant en matière plastique.

6. Appareil selon la revendication 5, caractérisé en ce que les deux éléments précités forment un pont (11) emboîtable radialement sur le boîtier et comportent à cet effet une échancrure (11H) s'étendant entre les éléments antérieur (11B) et postérieur (11C) et dont le profil épouse une partie en correspondance du boîtier.

7. Appareil selon la revendication 6, caractérisé en ce que la partie haute de l'élément postérieur (11C), et de l'élément antérieur (11B) sont formées par deux joues parallèles et espacées (11D,11E) comportant chacune l'échancrure (11I) précitée, les joues de l'élément antérieur (11B) étant réunies par un tronçon semi-cylindrique (11G).

8. Appareil selon l'une quelconque des revendications précédentes, caractérisé en ce que la face frontale de l'élément antérieur (11B) comporte un anneau (20) avec sur sa face intérieure une nervure hélicoïdale (21) formant filet de vis adaptée à coopérer avec une saignée (22) ménagée sur la face extérieure d'une bague molette (23) portant l'optique (15), afin de permettre un déplacement axial entre deux positions extrêmes.

9. Appareil selon l'une quelconque des revendications 6 à 8, caractérisé en ce que ledit pont (11) est adapté à recevoir entre les joues précitées un organe diffusant (30) disposé au moins en regard d'une fenêtre (10D) du boîtier qui est ménagée sur la coquille dorsale (10B) de celui-ci à l'opposé de la lentille optique (15).

10. Appareil selon la revendication 9, caractérisé en ce que l'organe diffusant (30) est emboîtable entre les joues précitées avec lesquelles il peut être fixé.

11. Appareil selon l'une quelconque des revendications 5 à 10, caractérisé en ce que ledit pont (11) comporte des moyens de verrouillage avec le boîtier (10), constitués par exemple par au moins un picot prévu sur ledit élément, et une dépression ménagée sur une coquille.

0114135

FIG.1

FIG.3

FIG.2